# EUROPÄISCHE PATENTSCHRIFT

(11) **EP 2 620 078 B1**
(45) Veröffentlichungstag und Bekanntmachung des Hinweises auf die Patenterteilung: **31.05.2017**
(21) Anmeldenummer: 13000410.4
(22) Anmeldetag: 28.01.2013
(51) Int. Cl.: A46D 3/00, A46B 3/06, A46B 11/00, A46D 3/04, B29C 45/14

(54) **Applikationsvorrichtung**
Brush applicator
Brosse applicateur

(30) Priorität: 27.01.2012 DE 202012000881 U
(43) Veröffentlichungstag der Anmeldung: 31.07.2013
(73) Patentinhaber: M+C Schiffer GmbH, 53577 Neustadt/Wied (DE)
(72) Erfinder: Graeve, Arndt, 56072 Koblenz (DE); Schmidt, Eric, 56588 Waldbreitbach (DE)
(74) Vertreter: Grünecker Patent- und Rechtsanwälte PartG mbB

(56) Entgegenhaltungen:
- WO-A1-01/03546
- DE-A1- 3 712 962
- US-A- 4 795 218
- US-A- 4 968 103

## Beschreibung

Die vorliegende Erfindung betrifft eine Applikationsvorrichtung zum Aufbringen von Medien. Dabei hat die vorliegende Erfindung insbesondere eine Applikationsvorrichtung im Blick, mit welcher Fluide oder Pasten insbesondere für die Gesundheits- bzw. Körperpflege aufgetragen werden können. Gedacht wird an Kosmetika sowie Medien mit medizinischen Wirk- und/oder Reinigungsstoffen wie beispielsweise Zahnpasta. Die Applikationsvorrichtung hat ein Gehäuse, das wenigstens einen Austragskanal für das Medium aufweist und hat des Weiteren ein diesem Austragskanal zugeordnetes Borstenbündel, welches ein Austragsende des Gehäuses überragt.

Eine solche Applikationsvorrichtung ist beispielsweise aus dem DE 20 2007 007 018 U1 bekannt. Bei diesem Stand der Technik wird durch das Gehäuse eine Verschlusskappe gebildet, die auf einen Behälter aufschraubbar ist. Der Austragskanal wird von einem Hülsenelement umgeben, welches das Borstenbündel trägt und mit der Verschlusskappe verbunden ist. Das Borstenbündel befindet sich an dem stirnseitigen Ende des Hülsenelementes und ist in etwa mit dem Durchmesser des Hülsenelementes ausgebildet.

Aus der DE 102 45 511 A1 ist eine Farbtube bekannt, deren Austragstülle mit einer Kappe überdeckt ist, welche die Tülle umfänglich umschließt und auf diese aufgeschraubt ist und an ihrem freien Ende den Austragskanal ausformt, der von einem ringförmig ausgebildeten Borstenbündel umgeben wird. Das ringförmig ausgebildete Borstenbündel ist an der Stirnseite des Aufsatzes befestigt.

Die aus der DE 20 2007 007 018 U1 bekannte Applikationsvorrichtung ist wegen der zweiteiligen Ausgestaltung aufwendig in der Herstellung. Darüber hinaus sind die Filamente des Borstenbündels nicht mit hinreichender Festigkeit an dem Hülsenelement befestigt.

Eine Applikationsvorrichtung mit den oberbegrifflichen Merkmalen von Anspruch 1 ist aus der DE 37 12 962 A1 bekannt. Bei diesem Stand der Technik werden die befestigungsseitigen Enden von Borstenfilamenten durch einen Heizspiegel angeschmolzen. Der Heizspiegel hat eine Formkontur, welche das schmelzflüssige Material der Borstenfilamente zu einem Fuß mit vorbestimmter geometrischer Abmessung kalibriert. Nach Erstarren des Fußes wird dieser in ein zuvor hergestelltes Gehäuse eingesetzt und mit dem Gehäuse verbunden, beispielsweise verschweißt.

Die vorliegende Erfindung betrifft ferner ein Verfahren zur Herstellung einer Applikationsvorrichtung der vorstehend genannten Art. Des Weiteren betrifft die vorliegende Erfindung eine Einrichtung zur Herstellung der Applikationsvorrichtung. Die Applikationsvorrichtung wird dabei als kostengünstiges Bauteil mittels Spritzgießen in einem Spritzgießwerkzeug hergestellt. Die vorliegende Erfindung will ein Spritzgießwerkzeug angeben, mit dem die Herstellung der vorerwähnten Applikationsvorrichtung auf wirtschaftliche Weise möglich ist.

Der vorliegenden Erfindung liegt zum Einen das Problem zugrunde, eine Applikationsvorrichtung anzugeben, die sich einfacher herstellen lässt. Des Weiteren will die vorliegende Erfindung ein Verfahren zur Herstellung der Applikationsvorrichtung und ein zur Durchführung des Verfahrens geeignetes Spritzgießwerkzeug angeben.

Zur Lösung des des vorrichtungsmäßigen Problems wird eine Applikationsvorrichtung mit den Merkmalen von Anspruch 1 vorgeschlagen.

Die erfindungsgemäße Applikationsvorrichtung hat ein aus Kunststoff ausgebildetes Gehäuse. In diesem ist der Austragskanal ausgespart, üblicherweise durch Umspritzen eines Kerns, der den Austragskanal freilässt und Teil eines Formwerkzeugteils einer Spritzgießvorrichtung ist. Mit diesem aus Kunststoff ausgeformten Gehäuse ist das Borstenbündel mittels Umspritzens verbunden. Hierzu hat das Borstenbündel Borstenfilamente, die an ihrem befestigungsseitigen Ende miteinander verbunden sind, und zwar durch Aufschmelzen des die Borstenfilamente ausformenden Materials. Die befestigungsseitigen Enden sind dabei unter Freilassung eines mittleren Bündelkanals angeordnet. Die befestigungsseitigen Enden der Borstenfilamente definieren dementsprechend einen im Wesentlichen umfänglich geschlossenen Befestigungsfuß. Der Befestigungsfuß kann eine runde ringförmige Ausgestaltung haben. Er kann auch polygonal ausgeformt sein. Wesentlich für die erfindungsgemäße Applikationsvorrichtung ist lediglich der Umstand, dass die einzelnen befestigungsseitigen Enden der Borstenfilamente den Bündelkanal freilassen. Dieser Bündelkanal kommuniziert mit dem in dem Gehäuse ausgeformten Austragskanal. Üblicherweise liegt der Befestigungsfuß des Borstenbündels am Ausgang des Austragskanals.

Das Borstenbündel wird durch Umspritzen mit Kunststoff mit dem das Gehäuse ausformenden Kunststoffmaterial verbunden. Dementsprechend ergibt sich eine einteilige Ausgestaltung, bei welcher die Borstenfilamente fest mit dem Gehäuse verbunden sind. Da des Weiteren die Borstenfilamente durch Anschmelzen befestigungsseitig miteinander verbunden sind, besteht nicht das Problem, dass sich einzelne Borstenfilamente im Rahmen der Benutzung lösen. Vielmehr sind sämtliche Borstenfilamente vorzugsweise stoff- und/oder formschlüssig mit dem Gehäuse der Applikationsvorrichtung verbunden. Des Weiteren sind sämtliche Borstenfilamente wiederum stoffschlüssig mit sich selbst im Wege des Aufschmelzens und Erstarrens verbunden.

Damit ist eine Applikationsvorrichtung geschaffen, die sich leichter und wirtschaftlicher herstellen lässt. Die Applikationsvorrichtung kann dabei Teil eines Behältnisses sein und/oder mit diesem verbindbar sein. So kann das Borstenbündel mittels Umspritzen mit einem die Pflege- bzw. Reinigungssubstanz aufnehmenden Behältnis fest verbunden sein. In diesem Fall bildet das Gehäuse der Applikationsvorrichtung auch das Behältnis zur Aufnahme der Reinigungs- bzw. Pflegesubstanz aus.

Gemäß einer bevorzugten Weiterbildung der vorliegenden Erfindung ist das Borstenbündel aus mehreren, einzelne Umfangssegmente ausbildenden Borstenbündelsegmenten zusammengesetzt. Dabei wird jedes einzelne Borstenbündelsegment üblicherweise aus einer Vielzahl von Borstenfilamenten gebildet. Die einzelnen Borstenbündelsegmente sind dabei vorzugsweise aus identischen Borstenfilamenten zusammengesetzt. Borstenfilamente unterschiedlicher Borstenbündelsegmente sind indes voneinander verschieden. Die Borstenbündelsegmente zeigen sich jedenfalls am befestigungsseitigen Ende des Borstenbündels als Umfangssegmente, d. h. Segmente des umfänglich geschlossenen und den Bündelkanal freilassenden Umfangs. Die einzelnen Borstenbündelsegmente können jeweils aus Borstenfilamenten gebildet sein, die farblich voneinander unterschiedlich ausgestaltet sind. Die abweichenden Eigenschaften können sich aber auch auf Filamentstärke, -länge, und/oder den Verrundungsgrad bzw. das Vorhandensein und/oder die Ausgestaltung von konisch zulaufenden nutzungsseitigen Enden (tapered) der Borstenfilamente beziehen.

Die erfindungsgemäße Applikationsvorrichtung kann dadurch hergestellt, dass ein in einem Formwerkzeugteil eines Spritzgießwerkzeugteils ausgesparter Kanal mit Borstenfilamenten bestopft wird, die befestigungsseitigen Enden der Borstenfilamente durch Anschmelzen zu einem einen Bündelkanal umschließenden Befestigungsfuß miteinander verbunden werden, das Spritzgießwerkzeug unter Einbindung des so vorbereiteten Formwerkzeugteils geschlossen und schließlich das Gehäuse bei Umspritzen des Befestigungsfußes aus Kunststoff hergestellt wird. Die Besonderheit des Verfahrens besteht dabei insbesondere darin, dass die Borstenbündel einen durch Anschmelzen gebildeten Befestigungsfuß ausformen, der den Bündelkanal umschließt. Der Befestigungsfuß ist dementsprechend ringförmig ausgebildet. Dabei kann der Befestigungsfuß auch eine ovale Grundform aufweisen.

Dementsprechend wird der Befestigungsfuß unmittelbar durch Umspritzen mit dem das Gehäuse ausformenden Kunststoff mit diesem verbunden. Der Bündelkanal bildet dabei jedenfalls im Bereich des Befestigungsfußes eine umfänglich geschlossene Umfangsfläche aus, die die befestigungsseitigen Enden der Borstenfilamente aufnimmt.

Die Applikationsvorrichtung ist vorzugsweise des Weiteren so ausgestaltet, dass das Gehäuse zwischen zwei Spritzwerkzeugelementen hergestellt wird, die an der Spritzgießvorrichtung fest montiert sind, und dass das Formwerkzeugteil außerhalb der Spritzgießvorrichtung bestopft und danach in eines der Formwerkzeugteile eingesetzt wird. Dadurch werden die Zyklen zum Bestopfen einerseits und zum Umspritzen andererseits entkoppelt.

Vorzugsweise werden die ein Borstenbündel bildenden Borstenfilamente beim Einschieben in den Kanal zunächst in einer dichten Packung zugeführt. Beim Hindurchschieben der Borstenfilamente durch den Kanal erfolgt erst eine Aufspreizung der dichtesten Packung derart, dass im Mittelpunkt der Bündelkanal ausgespart ist. Nach dem Hindurchschieben durch den Bündelkanal sind die Borstenfilamente dementsprechend auf der Einschiebeseite nach Art einer dichten Packung vorgesehen, wohingegen auf der gegenüberliegenden und eine Kavität des Spritzgießwerkzeuges begrenzenden Fläche die Borstenfilamente den ringförmigen Befestigungsfuß ausbilden und dort miteinander verschmolzen sind. So werden nach der bevorzugten Weiterbildung des Verfahrens beim Bestopfen des Kanals die Borstenfilamente umorientiert. Dabei werden die Borstenfilamente üblicherweise von einer eng um den Mittelpunkt des Kanals vorgesehenen Anordnung so umorientiert, dass die befestigungsseitigen Enden unter Freilassung des mittleren Bündelkanals ringförmig angeordnet sind.

So werden vorzugsweise die das Borstenbündel ausbildenden Borstenfilamente in mehrere voneinander getrennte Kanalabschnitte eingebracht und befestigungsseitig in dem Befestigungsfuß vereinigt. Das Bestopfen der einzelnen Kanalabschnitte kann dabei so erfolgen, dass in einzelnen Kanalabschnitten jeweils identisch ausgeformte Borstenfilamente aufgenommen sind, wohingegen in verschiedenen Kanalabschnitten voneinander verschiedene Borstenfilamente eingebracht werden. Jeder Kanalabschnitt bildet dementsprechend ein Borstenbündelsegment aus. Zur besseren Trennung der Filamente beim Einbringen in die Kanalabschnitte können diese über eine Rückfläche des Formwerkzeugteiles hinaus durch eine Trennwand verlängert sein, die einen Steg des Kanals nach außen fortsetzt, durch welchen Steg die einzelnen Kanalabschnitte in Umfangsrichtung innerhalb des Formwerkzeugteils begrenzt werden.

Bevorzugt wird der Befestigungsfuß mit Abstand von einer Oberfläche des Gehäuses in dem schmelzflüssigen Kunststoff eingesiegelt. Der Abstand ist dabei um zumindest den Faktor 5 größer als der Durchmesser der einzelnen Borstenfilamente. Der Abstand ist vorzugsweise begrenzt auf ein Maß entsprechend dem 30fachen, vorzugsweise dem 20fachen Filamentdurchmesser.

Gemäß einer bevorzugten Weiterbildung des Verfahrens wird beim Schließen des Spritzgießwerkzeugs das in das eine Spritzgießwerkzeugelement eingesetzte Formwerkzeugteil mit seinem den Bündelkanal innen begrenzenden Dorn dichtend gegen einen durch das andere Spritzgießwerkzeugelement ausgebildeten und einen Austragskanals des Gehäuses freilassenden Zapfen angelegt. Hierdurch ergibt sich ein dichtender Übergang zwischen dem Zapfen und dem Dorn, so dass nach Entformung der Austragskanal zuverlässig mit dem Bündelkanal kommuniziert.

Bevorzugt wird der Austragskanal zusammen mit einem Hohlraum ausgebildet. Hierzu weist das Spritzgießwerkzeug einen Werkzeugdorn auf, an dessen freien Ende der besagte Zapfen vorgesehen ist. Der Dorn und der Zapfen lassen einerseits den Hohlraum und andererseits den Austragskanal beim Spritzgießen der Kunststoffmasse frei.

Gemäß einer weiteren bevorzugten Ausgestaltung der Verfahrensführung wird an der Innenseite des Gehäuses ein in den Hohlraum vorspringender Rastvorsprung ausgeformt. Hierzu weist der zuvor erwähnte Werkzeugdorn an seinem Außenumfang zumindest eine umlaufende Nut auf.

Weitere Einzelheiten und Vorteile der vorliegenden Erfindung ergeben sich aus der nachfolgenden Beschreibung in Verbindung mit der Zeichnung. Diese zeigt:
- Figur 1: Eine Längsschnittansicht des Ausführungsbeispiels;
- Figur 2: Eine perspektivische Draufsicht eines Formwerkzeugteils zur Herstellung des in Figur 1 gezeigten Ausführungsbeispiels;
- Figur 3: Eine Draufsicht auf das in den Figuren 2 gezeigte Ausführungsbeispiel auf die Oberseite;
- Figur 4: Eine Schnittansicht entlang der Linie V-V gemäß der Darstellung in Figur 3;
- Figur 5: Eine Draufsicht auf die Unterseite des in den Figuren 2 bis 4 verdeutlichten Ausführungsbeispiels und
- Figur 6: Eine Querschnittsansicht durch ein Ausführungsbeispiel eines Spritzgießwerkzeuges zur Herstellung der Applikationsvorrichtung.

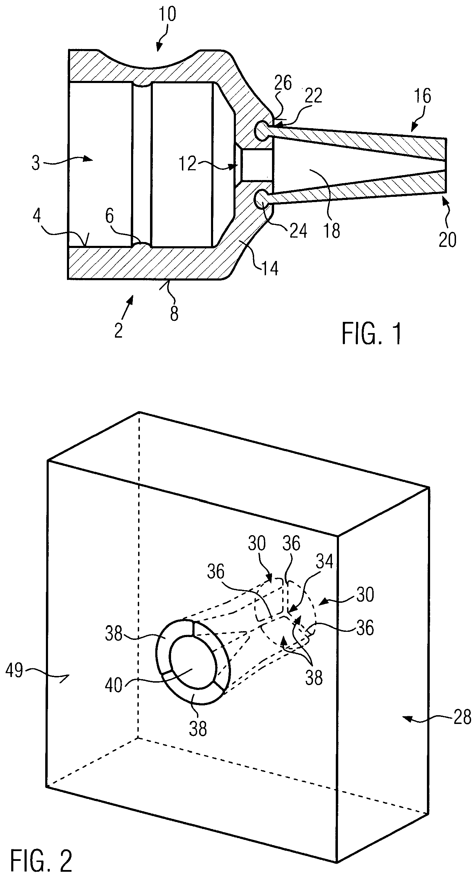

Die Figur 1 zeigt eine Längsschnittansicht durch ein Ausführungsbeispiel einer Applikationsvorrichtung zum Aufbringen von Medien, beispielsweise Kosmetika, mit einem Gehäuse 2, welches als Kappe ausgebildet und auf eine Tube eines aufzubringenden Mediums aufsetzbar ist. Eine Innenumfangsfläche 4 des Gehäuses 2 wird dementsprechend von einem in Umfangsrichtung umlaufenden Rastvorsprung 6 überragt. An einem Teilabschnitt einer Außenumfangsfläche 8 ist eine Griffmulde 10 vorgesehen. Das Gehäuse 2 bildet des Weiteren einen Austragskanal 12 aus, der mittig und an einer Stirnseite 14 des Gehäuses 2 ausgespart ist.

Der Austragskanal 12 mündet in ein einziges Borstenbündel 16, welches einen sich zu dem freien Ende des Borstenbündels 16 verjüngenden Bündelkanal 18 ausbildet.

Das Borstenbündel 16 ist aus zylindrisch ausgeformten Borstenfilamenten gebildet. Dementsprechend ergibt sich an dem freien, nutzungsseitigen Ende 20 ein Borstenbündel 16 mit kleinerem Außendurchmesser, indes größerer Wandstärke, und an einem befestigungsseitigen Ende 22 das Borstenbündel 16 mit einer relativ geringen Wandstärke bei im Vergleich größerem Durchmesser.

An dem befestigungsseitigen Ende 22 sind die Filamente zur Ausbildung eines einheitlichen Befestigungsfußes 24 miteinander verbunden. Hierzu werden die befestigungsseitigen Enden 22 erwärmt und aufgeschmolzen. Bei Erstarrung ergibt sich der Befestigungsfuß 24. Dieser Befestigungsfuß 24 ist durch Umspritzen mit dem das Gehäuse 2 ausformenden Kunststoffmaterial verbunden. Dementsprechend befindet sich ein durch Anschmelzen der Borstenfilamente ausgebildetes und den Befestigungsfuß 24 ausformendes verdicktes Ende des Borstenbündels 16 innerhalb des das Gehäuse 2 ausformenden Kunststoffmaterials. Das Borstenbündel 16 ist dementsprechend sicher mit dem Gehäuse 2 verbunden.

Das in Figur 1 gezeigte Ausführungsbeispiel wird in einem mehrteiligen, nachstehend noch näher erläuterten Spritzgießwerkzeug hergestellt. Das Spritzgießwerkzeug hat zwei der Spritzgießvorrichtung fest zugeordnete Formwerkzeugelemente, von denen das eine auf einer beweglichen Trägerplatte gelagert und das andere ortsfest innerhalb der Spritzgießvorrichtung montiert ist. Die Teilungsebene liegt beispielsweise am Übergang zwischen der Stirnseite 14 und dem im Wesentlichen zylindrischen Umfang des Gehäuses, d. h. zwischen der Griffsmulde 10 und der Stirnseite 14. Eine ebene, von dem Borstenbündel 16 durchragte Oberfläche 26, wird durch das in den Figuren 2 - 5 Ausführungsbeispiel eines Formwerkzeugteils abgeformt. Dieses mit Bezugszeichen 28 gekennzeichnete Formwerkzeugteil wird in eines der Spritzwerkzeugelemente zur Vervollständigung der Kavität eingesetzt. Das Formwerkzeugteil 28 hat einen dasselbe durchsetzenden Kanal 30. Dieser Kanal 30 ist durch mehrere Kanalabschnitte 32 unterteilt, die jedenfalls an der Außenseite (vgl. Figur 2) durch von einem Mittelpunkt 34 abgehende Stege 36 voneinander getrennt sind und auf der Innenseite des Formwerkzeugteils 28 in einen ringförmigen, umlaufend durchgehend ausgeformten Ringabschnitt 38 münden. Die Innenumfangsfläche dieses Ringsabschnitts 38 wird durch einen Dorn 40 ausgeformt, der über die Stege 36 einstückig an dem Formwerkzeugteil 28 angeordnet ist.

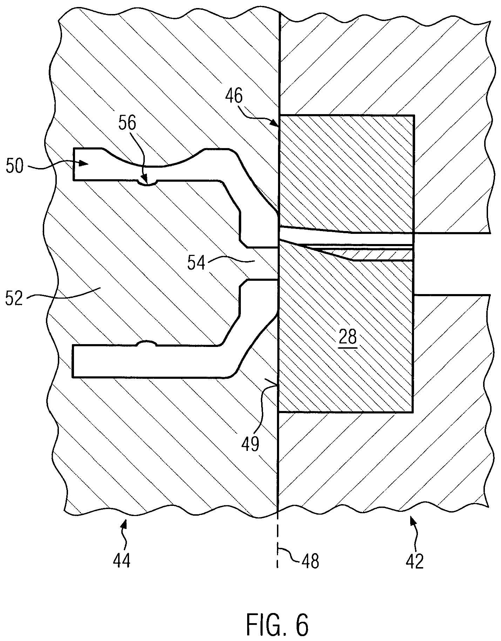

Die Figur 6 zeigt ein Ausführungsbeispiel eines Spritzgießwerkzeuges mit zwei Spritzgießwerkzeugelementen 42, 44, von denen das eine Element 42 eine Aussparung 46 zur Aufnahme des in den Figuren 2 bis 5 gezeigten Formwerkzeugteils 28 ausformt. In Figur 6 ist das Spritzgießwerkzeug in seiner geschlossenen Stellung gezeigt. Die Spritzgießwerkzeugelemente 42, 44 liegen in einer Teilungsebene 48 aneinander an, wobei das Formwerkzeugteil 28 mit seiner in der Teilungsebene 48 liegenden Frontfläche 49 eine Kavität 50 zur Ausbildung des Gehäuses 2 begrenzt. Diese Kavität 50 wird im Wesentlichen allein durch das andere Spritzgießwerkzeugelement 44 gebildet. Das Spritzgießwerkzeugelement 44 hat einen Werkzeugdom 52, der die Kavität 50 im Wesentlichen nach Art eines Zylinders innen begrenzt und ausformt. An dem stirnseitigen Ende des Werkzeugdoms 52 läuft die Kavität konisch zu. Der Werkzeugdom 52 wird überragt von einem Zapfen 54, der konzentrisch zu dem Werkzeugdom 52 angeordnet und zylindrisch ausgeformt ist. In der in Figur 6 gezeigten geschlossenen Stellung des Spritzgießwerkzeuges liegt dieser Zapfen 54 dichtend gegen die an der Vorderfläche 49 durch den Dorn 40 definierten Stirnfläche des Dorns 40 an.

Wie die Schnittansicht nach Figur 6 weiter erkennen lässt, hat de Werkzeugdom 52 zur Ausbildung des umlaufenden Rastvorsprunges 6 eine am Umfang umlaufende Nut 56.

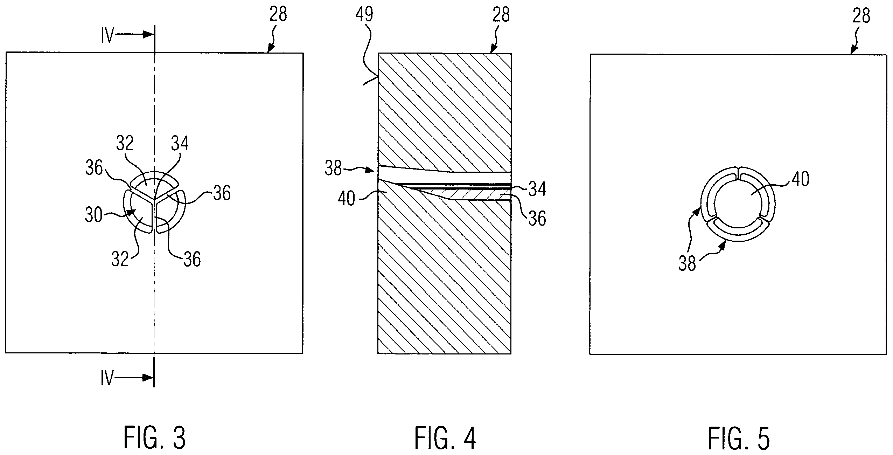

Wie insbesondere die Figuren 2 und 3 verdeutlichen, sind die Kanalabschnitte 32 lediglich durch die Stege 36 von dem Mittelpunkt 34 getrennt. Dementsprechend werden von dort in das Formwerkzeugteil 28 beim Bestopfen desselben eingebrachte Borstenfilamente zunächst im Wesentlichen konzentrisch zu dem Mittelpunkt 34, in radialer Richtung möglichst dicht beieinander eingebracht.

Da - wie Figur 4 verdeutlicht - die Kanalabschnitte 32 über die Dicke des Formwerkzeugteils 28 in radialer Richtung nach außen divergieren, ergibt sich eine Umorientierung der Borstenfilamente, sodass diese an der Unterseite gleichmäßig in dem Ringabschnitt 38 verteilt und ringförmig angeordnet sind. Die Borstenfilamente überragen danach üblicherweise die Unterseite des Formwerkzeugteils 28. Durch axiales Verschieben der Borstenfilamente gegeneinander kann das so gebildete Borstenbündel konturiert werden, d. h. die nutzungsseitigen Enden 20 der einzelnen Borstenfilamente können in unterschiedlichen, sich rechtwinklig zu der Längserstreckung des Borstenbündels erstreckenden Ebenen angeordnet werden. Danach werden die Borstenfilamente üblicherweise an ihren befestigungsseitigen Enden 22 beschnitten, sodass diese nunmehr auf einer Ebene liegen. Danach erfolgt das Anschmelzen der befestigungsseitigen Enden 22 zur Ausformung des Befestigungsfußes 24.

Danach wird das so vorbereitete, bestopfte Formwerkzeugteil 28 in das eine Spritzwerkzeugelement 42 eingesetzt. Die Spritzgießwerkzeugelemente werden aufeinander zugefahren, um die Kavität 50 zu schließen. Flüssiger Kunststoff wird in die Kavität 50 eingespritzt, um das Gehäuse 2 unter Einsieglung des Befestigungsfußes 24 auszuformen. Das so hergestellte und mit dem Borstenbündel 16 versehene Gehäuse 2 wird entformt. Die Griffmulde 10 ist so ausgebildet, dass das Gehäuse 2 trotz des sich ergebenden Hinterschnitts aus dem die Griffmulde 10 ausformenden Formwerkzeugelement 44 entformt werden kann. Der Befestigungsfuß 24 umgibt eingebettet in den Kunststoff nunmehr den Austragskanal 12.

### Bezugszeichenliste

- 2: Gehäuse
- 3: Hohlraum
- 4: Innenumfangsfläche
- 6: Rastvorsprung
- 8: Außenumfangsfläche
- 10: Griffmulde
- 12: Austragskanal
- 14: Stirnseite
- 16: Borstenbündel
- 18: Bündelkanal
- 20: Benutzungsseitiges Ende
- 22: Befestigungsseitiges Ende
- 24: Befestigungsfuß
- 26: Oberfläche
- 28: Formwerkzeugteil
- 30: Kanal
- 32: Kanalabschnitte
- 34: Mittelpunkt
- 36: Steg
- 38: Ringabschnitt
- 40: Dorn
- 42: Spritzgießwerkzeugelement
- 44: Spritzgießwerkzeugelement
- 46: Aussparung
- 48: Teilungsebene
- 49: Vorderfläche
- 50: Kavität
- 52: Werkzeugdom
- 54: Zapfen
- 56: Nut

## Patentansprüche

1. Applikationsvorrichtung zum Aufbringen von Medien, insbesondere zu Gesundheits- und Körperpflege, mit einem Gehäuse (2), das wenigstens einen Austragskanal (12) für das Medium aufweist, und mit einem diesem Austragskanal (12) zugeordnetem und ein Ende des Gehäuses (2) überragenden Borstenbündel (16), wobei das Borstenbündel (16) ausformende Borstenfilamente einen mittleren Bündelkanal (18) freilassen und befestigungsseitige Enden der Borstenfilamente durch Anschmelzen miteinander verbunden sind, **dadurch gekennzeichnet, dass** die befestigungsseitigen Enden der Borstenfilamente durch Umspritzen mit einem das Gehäuse (2) ausformenden Kunststoff mit dem Gehäuse (2) verbunden sind.

2. Applikationsvorrichtung nach Anspruch 1, **dadurch gekennzeichnet, dass** das Borstenbündel (16) aus mehreren, einzelne Umfangssegmente ausbildenden Borstenbündelsegmenten zusammengesetzt ist.

3. Applikationsvorrichtung nach Anspruch 1 oder 2, **dadurch gekennzeichnet, dass**, die einzelnen Borstenbündelsegmente aus identischen Borstenfilamenten zusammengesetzt sind und dass die Borstenfilamente unterschiedlicher Borstenbündelsegmente voneinander verschieden sind.

## Claims

1. Application device for applying media, particularly for health and body care, comprising a housing (2) which comprises at least one discharge channel (12) for the medium, and comprising a bristle bundle (16) which is assigned to said discharge channel (12) and projects over an end of the housing (2), wherein bristle filaments forming the bristle bundle (16) release a middle bundle channel (18), and ends of the bristle filaments at the fastening side are interconnected by fusion, **characterized in that** the ends of the bristle filaments at the fastening side are connected to the housing (2) by overmolding with a plastic forming the housing (2).

2. Application device according to claim 1, **characterized in that** the bristle bundle (16) is composed of several bristle bundle segments forming individual circumferential segments.

3. Application device according to claim 1 or 2, **characterized in that** the individual bristle bundle segments are composed of identical bristle filaments and that the bristle filaments of different bristle bundle segments differ from one another.

## Revendications

1. Dispositif d'application permettant d'appliquer des substances destinées en particulier aux soins de santé et du corps, doté d'un boîtier(2) comprenant au moins un canal de déversement (12) pour la substance et d'une touffe de poils (16) attribuée à ce canal de déversement (12) et se trouvant en saillie par rapport à une extrémité du boîtier (2), de sorte que les filaments de poils formant la touffe de poils (16) laissent libre un canal central de touffe (18) et que les extrémités côté fixation des filaments de poils(16) sont reliées entre elles par fusion, **caractérisé en ce que** les extrémités côté fixation des filaments de poils sont reliées au boîtier (2) par un surmoulage avec une matière plastique formant le boîtier (2).

2. Dispositif d'application selon la revendication 1, **caractérisé en ce que** la touffe de poils (16) est composée de plusieurs segments de touffe de poils formant des segments circonférentiels individuels.

3. Dispositif d'application selon la revendication 1 ou 2, **caractérisé en ce que** les différents segments de touffe de poils individuels sont composés de filaments de poils identiques et **en ce que** les filaments de poils de segments de touffes de poils différents diffèrent les uns des autres.
